# EUROPÄISCHE PATENTSCHRIFT

(11) **EP 4 295 663 B1**
(45) Veröffentlichungstag und Bekanntmachung des Hinweises auf die Patenterteilung: **05.08.2026**
(21) Anmeldenummer: 23181072.2
(22) Anmeldetag: 22.06.2023
(51) Int. Cl.: A01D 87/12, A01D 90/08, A01F 15/07, A01F 15/08, B60P 1/00

(54) **BALLENAUFNAHMEVORRICHTUNG ZUR AUFNAHME VON RUNDBALLEN EINER RUNDBALLENPRESSE**
BALE PICK-UP DEVICE FOR RECEIVING ROUND BALES OF A ROUND BALER
DISPOSITIF DE RAMASSAGE DE BALLES POUR RECEVOIR DES BALLES RONDES D'UNE PRESSE À BALLES RONDES

(30) Priorität: 24.06.2022 DE 102022115781
(43) Veröffentlichungstag der Anmeldung: 27.12.2023
(73) Patentinhaber: Maschinenfabrik Bernard Krone GmbH & Co. KG, 48480 Spelle (DE)
(72) Erfinder: DE VREE, Willem Geurt, 7881 CV Emmer-compascuum (NL); BRUHN, Nils, 48480 Spelle (DE)

(56) Entgegenhaltungen:
- EP-A1- 0 404 668
- CA-A1- 2 165 111
- DE-C2- 3 304 166
- US-A- 3 480 163
- US-A1- 2005 188 862

## Beschreibung

Die Erfindung betrifft eine Ballenaufnahmevorrichtung zur Aufnahme zumindest eines Rundballens von einer Rundballenpresse. Ferner betrifft die Erfindung eine Fahrzeugkombination umfassend die Ballenaufnahmevorrichtung. Die Ballenaufnahmevorrichtung umfasst eine Koppeleinrichtung mit zumindest einem Koppelrahmenelement, das zur ortsfesten Anordnung an einem Maschinenrahmen der Rundballenpresse ausgebildet ist. Ferner umfasst die Ballenaufnahmevorrichtung zumindest ein Deichselelement, das sich in eine Aufnahmerichtung zumindest teilweise zwischen dem Koppelrahmenelement und einem Maschinenrahmen der Ballenvorrichtung erstreckt. Das Deichselelement ist derart an der Koppeleinrichtung gelagert, dass es relativ zum Koppelrahmenelement zumindest um eine Hochachse schwenkbeweglich ist, die wenigstens in einer ersten Stellung der Koppeleinrichtung zu einer Aufstandsfläche der Ballenaufnahmevorrichtung rechtwinklig angeordnet ist.

Eine derartige Ballenaufnahmevorrichtung ist als Ballenwickler bekannt geworden, der an die Rundballenpresse anzuhängen ist und zur Umwicklung des Rundballens mit einem Hüllmaterial ausgebildet ist. Nachteilig ist die bekannte Ballenaufnahmevorrichtung einerseits, da die Koppeleinrichtung und das Deichselelement nur eine geringfügige Verschwenkung der Rundballenpresse relativ zur Ballenaufnahmevorrichtung zulassen, die im Betrieb den zu erreichenden Kurvenradius begrenzt und regelmäßig zu Kollisionen zwischen der Koppeleinrichtung und der Ballenaufnahmevorrichtung führt. Nachteilig ist die Ballenaufnahmevorrichtung andererseits, da die Koppeleinrichtung und das Deichselelement selbst zur Ermöglichung der geringfügigen Verschwenkung derart spitz zur Hochachse hin zulaufend ausgebildet sind, dass seitlich der Hochachse zwischen der Koppeleinrichtung und dem Deichselelement ein Zwischenraum klafft, in den der Rundballen während seiner Aufnahme von der Rundballenpresse seitlich hinabfallen kann, bevor er den Maschinenrahmen der Ballenaufnahmevorrichtung erreicht hat. DE 33 04 166 C2 offenbart eine Fahrzeugkombination umfassend eine Rundballenpresse und eine Ballenaufnahmevorrichtung mit Überleitelement.

Die Aufgabe der vorliegenden Erfindung ist die Bereitstellung einer gattungsgemäßen Ballenaufnahmevorrichtung und einer Fahrzeugkombination umfassend die Ballenaufnahmevorrichtung, die die vorbeschriebenen Nachteile vermeiden. Erfindungsgemäß weist die Ballenaufnahmevorrichtung ein Überleitelement auf. Das Überleitelement ist an der Koppeleinrichtung gelagert und relativ zum Deichselelement zumindest um die Hochachse schwenkbeweglich. Das Überleitelement erstreckt sich derart in die Aufnahmerichtung, dass das Deichselelement in einer Seitenansicht oder einem Längsschnitt zumindest teilweise zwischen dem Überleitelement und der Aufstandsfläche angeordnet ist.

Bei der Ballenaufnahmevorrichtung handelt es sich insbesondere um ein mit der der Rundballenpresse zu koppelndes Fahrzeug, das ein eigenes Fahrwerk umfasst. Die Ballenaufnahmevorrichtung bildet bevorzugt eine an die Rundballenpresse, insbesondere eine Presskammer davon, anschließende Aufnahmestrecke für den Rundballen aus. Die Aufnahmestrecke weist aufgrund der genormten Rundballenmaße bevorzugt eine Breite von zumindest 1,20 m und eine Höhe von zumindest 1,20 m aufweist. Die Ballenaufnahmevorrichtung ist vorzugsweise zur Aufnahme und zum Transport mehrerer, insbesondere von zumindest vier, Rundballen ausgebildet. Bevorzugt ist die Ballenaufnahmevorrichtung derart ausgebildet, dass die Rundballen bei ihrer Aufnahme nicht seitlich von ihrer Position in der Presskammer verlagert werden (In-Line-Aufnahme).

Das Koppelrahmenelement ist insbesondere unbeweglich am Maschinenrahmen der Rundballenpresse zu befestigen, bevorzugt zu verschrauben. Vorzugsweise weist die Ballenaufnahmevorrichtung zwei quer zur Aufnahmerichtung zueinander versetzte Koppelrahmenelemente auf. Bei dem zumindest einen Koppelrahmenelement handelt es sich insbesondere um Unterlenkerfanghaken, die sich in der Landwirtschaft zur Anhängung von Arbeitsmaschinen bewährt haben.

Die gedachte Hochachse ist in einer Frontansicht der Ballenaufnahmevorrichtung bevorzugt mittig, das heißt innerhalb einer Längsmittelebene, angeordnet. Die Längsmittelebene ist durch die Hochachse und eine in eine Fahrtrichtung, in die die Ballenaufnahmevorrichtung im Betrieb über den Acker zu bewegen ist, verlaufende Längsachse aufgespannt. Die Koppeleinrichtung ist insbesondere spiegelsymmetrisch zur Längsmittelebene ausgebildet. Die Aufnahmerichtung ist bevorzugt rechtwinklig zur Hochachse und/oder zumindest anteilig entgegen der Fahrtrichtung ausgerichtet. Die Aufstandsfläche ist eine gedachte, ebene Fläche, die an das Fahrwerk, bevorzugt Räder, der Ballenaufnahmevorrichtung angrenzt, ohne sie zu schneiden, und sich in die Fahrtrichtung erstreckt und/oder der Bodenfläche des Ackers entspricht, sofern sie eben ist. Die Hochachse verläuft dann vertikal, wenn die Aufstandsfläche sich horizontal erstreckt und die Koppeleinrichtung in der ersten Stellung angeordnet ist. Bevorzugt verläuft die Hochachse in einer bestimmten Stellung der Koppeleinrichtung oder des Deichselelementes um < 90° angewinkelt zur Aufstandsfläche.

Das Deichselelement verbindet die Koppeleinrichtung mit dem Maschinenrahmen der Ballenaufnahmevorrichtung. Der Maschinenrahmen ist bevorzugt starr zu einer Fahrwerksachse der Ballenaufnahmevorrichtung ausgebildet und/oder weist bevorzugt zumindest zwei seitliche Längsträger auf. Zu dem Maschinenrahmen ist das Deichselelement bevorzugt nicht um eine zur Aufstandsfläche angewinkelte Schwenkachse schwenkbeweglich. Bevorzugt umfasst das Deichselelement einen zentralen, sich entgegen der Aufnahmerichtung vom Maschinenrahmen zur Koppeleinrichtung erstreckenden und auf Zug zu belastenden Träger. Vorzugsweise ist das Deichselelement relativ zum Koppelrahmenelement um ca. 140° schwenkbeweglich um die Hochachse.

Das Überleitelement ist derart angeordnet, dass zumindest ein Teil von ihm im Betrieb oberhalb zumindest eines Teils des Deichselelementes angeordnet ist. Das Überleitelement reicht von der Koppeleinrichtung aus bevorzugt in die Aufnahmerichtung über die Hochachse hinaus. Das Überleitelement ist insbesondere derart gelagert, dass es relativ zum Koppelrahmenelement nicht um eine zur Aufstandsfläche angewinkelte Achse wie zum Beispiel die Hochachse schwenkbeweglich ist. Das Überleitelement folgt einer Verschwenkung des Maschinenrahmens der Ballenaufnahmevorrichtung relativ zur Rundballenpresse im Betrieb folglich nicht. In der Seitenansicht bzw. im Längsschnitt erstreckt sich das Überleitelement bevorzugt hauptsächlich länglich und verhältnismäßig flach in die Aufnahmerichtung und/oder parallel zur Haupterstreckungsrichtung des Deichselelementes.

Durch das Überleitelement wird die Aufgabe insofern gelöst, als einerseits die Koppeleinrichtung und/oder das Deichselelement derart schmal bzw. zur Hochachse spitz zulaufend ausgebildet werden können, dass eine im landwirtschaftlichen Betrieb jedenfalls ausreichend weite Verschwenkung des Deichselelementes relativ zur Koppeleinrichtung ermöglicht ist. Andererseits ist ein Hinabfallen des Rundballens in den Zwischenraum durch das ihn überbrückende Überleitelement verhindert. Das Überleitelement ist dabei insbesondere derart ausgebildet, dass eine Kollision damit bei der Verschwenkung ausgeschlossen ist.

Vorzugsweise ist das Überleitelement derart an der Koppeleinrichtung gelagert, dass es relativ zum Koppelrahmenelement um eine zur Aufstandsfläche parallele Querachse schwenkbeweglich ist. Die gedachte Querachse ist insbesondere ortsfest zum Koppelrahmenelement positioniert. Durch die derart schwenkbewegliche Lagerung des Überleitelementes kann es im Falle einer Änderung einer Steigung und/oder eines Gefälles des Ackers, auf der die Ballenaufnahmevorrichtung betrieben wird, seine Position zu Gunsten einer zuverlässigen Aufnahme des Rundballens anpassen. Die Hochachse und die Querachse sind bevorzugt derart angeordnet, dass sie sich nicht schneiden, das heißt, dass sie voneinander beanstandet sind. Die Hochachse ist im Verhältnis zur Querachse insbesondere in die Aufnahmerichtung versetzt angeordnet.

Bevorzugt ist das Deichselelement derart an der Koppeleinrichtung gelagert, dass es relativ zum Koppelrahmenelement um eine zur Aufstandsfläche parallele Achse schwenkbeweglich ist. Besonders bevorzugt ist das Deichselelement derart gelagert, dass es relativ zum Koppelrahmenelement, ebenso wie das Überleitelement, um die Querachse schwenkbeweglich ist. Dadurch wird, abgesehen von einer Verschwenkung um die Hochachse, eine Relativbewegung des Überleitelementes und des Deichselelementes im Falle der Änderung der Steigung bzw. des Gefälles vermieden und kann die zur Aufnahme des Rundballens bestmögliche Konfiguration beibehalten werden.

Vorzugsweise ist das Überleitelement derart an der Koppeleinrichtung gelagert, dass es relativ zum Deichselelement um die Querachse schwenkbeweglich ist. So sind das Überleitelement und das Deichselelement nicht nur relativ zum Koppelrahmenelement, sondern auch relativ zueinander um die Querachse schwenkbeweglich. Dadurch wird das Risiko einer Blockade der Schwenkbewegung des Deichselelementes relativ zum Überleitelement um die Hochachse reduziert und kann das Überleitelement nach oben hin ausweichen. Alternativ sind das Überleitelement und das Deichselelement relativ zueinander nicht schwenkbeweglich um die Querachse gelagert, wodurch sich durch ein einzusparendes Gelenk an anderer Stelle die Ausfallwahrscheinlichkeit reduzieren lässt.

Die Koppeleinrichtung weist bevorzugt ein Koppelzwischenelement auf, dass am Koppelrahmenelement ausschließlich schwenkbeweglich um die Querachse gelagert ist und am Deichselelement ausschließlich schwenkbeweglich um die Hochachse gelagert ist. Durch das Koppelzwischenelement lassen sich die vorbeschriebenen Schwenkbewegungen durch zwei getrennte und jeweils nur eine Schwenkrichtung erlaubende Gelenke umsetzen, deren Ausfallwahrscheinlichkeit gegenüber der eines komplexen Gelenkes geringer ist. Außerdem kann so mit dem Koppelzwischenelement bereits ein Teil der Koppeleinrichtung zur Aufnahme des Rundballens beitragen. Zur weiteren konstruktiven Vereinfachung ist das Überleitelement vorzugsweise vom Koppelrahmenelement beanstandet am Koppelzwischenelement gelagert.

Das Überleitelement hat vorzugsweise eine auf die Querachse bezogene radiale Erstreckung, die zumindest in einer Geradeausstellung der Ballenaufnahmevorrichtung zumindest der Hälfte, bevorzugt zwei Drittel, besonders bevorzugt drei Viertel oder mehr, des Abstandes des Maschinenrahmens der Ballenaufnahmevorrichtung von der Querachse entspricht. Bevorzugt ist das Überleitelement derart ausgebildet, dass seine radiale Erstreckung veränderlich ist. Insbesondere zumindest ein dem Maschinenrahmen der Ballenaufnahmevorrichtung zugewandtes Ende des Überleitelementes von einem verstellbaren Verlängerungselement ausgebildet. In der Geradeausstellung der Ballenaufnahmevorrichtung ist das Deichselelement relativ zur Koppeleinrichtung nicht seitlich um die Hochachse verschwenkt und ist die Koppeleinrichtung insbesondere in der ersten Stellung angeordnet. In der Geradeausstellung ordnet sich die Ballenaufnahmevorrichtung im Betrieb dann an, wenn die Ballenaufnahmevorrichtung geradeaus, das heißt ohne Kurvenfahrt, auf dem Acker fortbewegt wird. Durch die radiale Erstreckung des Überleitelementes reicht es bis nah an den Maschinenrahmen der Ballenaufnahmevorrichtung heran und hat es insbesondere eine Länge, die der Länge des Deichselelementes zumindest ähnelt. Hierdurch wird das Risiko eines Herunterfallens des Rundballens zwischen dem Maschinenrahmen und dem Überleitelement minimiert.

Vorzugsweise ist der Abstand der Hochachse vom Maschinenrahmen der Ballenaufnahmevorrichtung mindestens so groß wie der Abstand der Hochachse von der Querachse. Besonders bevorzugt ist der Abstand der Hochachse vom Maschinenrahmen mindestens doppelt so groß oder gar mindestens fünffach so groß wie der Abstand der Hochachse von der Querachse. Hierdurch ist die Hochachse besonders weit vorne, insbesondere unterhalb der Presskammer der Rundballenpresse anzuordnen, woraus sich mehrere Vorteile ergeben. Zum einen wird hierdurch der Schwenkwinkel des Deichselelementes relativ zur Koppeleinrichtung um die vertikale Achse bei einer vergleichbaren Kurvenfahrt reduziert und eine stabilere Fahrdynamik der Ballenaufnahmevorrichtung erreicht. Zum anderen erlaubt diese Anordnung der Hochachse eine Aufnahme des Rundballens auch noch zumindest bei geringfügigen Kurvenfahrten bzw. Schwenkwinkeln um die Hochachse.

Vorzugsweise weist die Ballenaufnahmevorrichtung zumindest ein Deichselstellelement auf. Das Deichselstellelement ist zu einer Verschwenkung des Deichselelementes relativ zum Maschinenrahmen der Ballenaufnahmevorrichtung um eine Deichselschwenkachse ausgebildet, die in der Geradeausstellung der Ballenaufnahmevorrichtung zur Querachse parallel angeordnet ist. Bei dem Deichselstellelement handelt es sich insbesondere um einen Hydraulikzylinder. Vorzugsweise weist die Ballenaufnahmevorrichtung zwei Deichselstellelemente auf, die an zwei gegenüberliegenden Seiten des Maschinenrahmens angeordnet sind. Durch das Deichselstellelement lassen sich das Deichselelement und der Maschinenrahmen zumindest zu einem Großteil und insbesondere bis auf die Aufstandsfläche in eine V-Form absenken, woraufhin die Aufnahmerichtung abwärtsgerichtet ist. Im abgesenkten Zustand gelangt der Rundballen vereinfacht, da schwerkraftbedingt, bis zum Maschinenrahmen der Ballenaufnahmevorrichtung. Alternativ ist das Deichselelement starr am Maschinerahmen angeordnet.

Vorzugsweise weist das Überleitelement einen Abstützabschnitt zur Abstützung des Überleitelementes auf dem Deichselelement auf. Insbesondere liegt das Überleitelement im Betrieb mit dem Abstützabschnitt auf dem Deichselelement auf. Dazu weist der Abstützabschnitt insbesondere eine zur Aufstandsfläche gerichtete Oberfläche auf. Damit ist das Überleitelement bevorzugt im vorderen Bereich an der Koppeleinrichtung, insbesondere am Koppelzwischenelement, und im hinteren Bereich am Deichselelement gelagert. Diese Lagerung ist unabhängig davon vorteilhaft, ob das Überleitelement relativ zum Deichselelement um die Querachse schwenkbeweglich ist. Vorteilhaft ist der Abstützabschnitt insofern, als dadurch die Gewichtskraft eines oberhalb des Deichselelementes auf dem Überleitelement aufliegenden Rundballens nicht alleine über die Koppelleinrichtung abzuleiten ist und das Überleitelement entsprechend massiv auszubilden ist, sondern unmittelbar auf das Deichselelement und insbesondere folglich zumindest zum Teil auf das Fahrwerk der Ballenaufnahmevorrichtung abzuleiten ist.

Der Abstützabschnitt und/oder seine beschriebene Oberfläche erstrecken/erstreckt sich besonders bevorzugt zumindest im Wesentlichen oder exakt kreisbogenförmig um die Hochachse. Insbesondere wird der Abstützabschnitt von einem Rohr mit einem zu einer Mittellinie symmetrischen Querschnitt ausgebildet, wobei sich die Mittellinie kreisbogenförmig um die Hochachse erstreckt. Der Abstützabschnitt erstreckt sich vorzugsweise um zumindest 90°, insbesondere zumindest um den maximalen Schwenkwinkel des Deichselelementes relativ zum Koppelrahmenelement um die Hochachse.

In einer vorteilhaften Ausgestaltung der Erfindung ist zwischen dem Deichselelement und dem Überleitelement ein Kugellager oder ein Gleitlager, insbesondere aus Kunststoff angeordnet. Das Gleitlager ist insbesondere als ein zwischen dem Deichselelement und dem Überleitelement, vorzugsweise am Deichselelement, angeordnetes und reibungsminderndes Kunststoffelement, z.B. eine Kunststoffplatte, ausgebildet. Das Kugellager oder ein alternatives Rollen- oder Tonnenlager ist insbesondere dann vorteilhaft, wenn das Überleitelement relativ zum Deichselelement nicht um die Querachse schwenkbeweglich ist. Durch das Kugellager oder das Gleitlager wird die vorteilhafte Kraftübertragung erreicht, ohne dass sich damit ein die Zuverlässigkeit der beiden Aufnahmevorrichtungen gefährdender Verschleiß einstellt.

Bevorzugt weist das Überleitelement zumindest zwei sich länglich in die Aufnahmerichtung erstreckende Überleitabschnitte auf, zwischen denen sich in einer Draufsicht zumindest in der Geradeausstellung das Deichselelement zumindest teilweise erstreckt. Das Deichselelement erstreckt sich insbesondere länglich in der Längsmittelebene. Die Überleitabschnitte erstrecken sich zur Längsmittelebene versetzt und parallel zu ihr länglich und sind insbesondere spiegelsymmetrisch zur Längsmittelebene ausgebildet. Die Überleitabschnitte erlauben ein ruhiges rollen des Rundballens in die Aufnahmerichtung. Das Überleitelement ist insbesondere einstückig und/oder starr ausgebildet. Hierzu sind die Überleitabschnitte bevorzugt mit dem Abstützabschnitt und insbesondere einem sich parallel zur Querachse erstreckenden Querträger des Überleitelementes verschweißt.

Die Aufgabe wird weiterhin gelöst durch eine Fahrzeugkombination umfassend die vor- und/oder nachbeschriebe Rundballenpresse und die vor- und/oder nachbeschriebene Ballenaufnahmevorrichtung, die mit der Rundballenpresse gekoppelt ist.

Dabei ist das zumindest eine Koppelrahmenelement ortsfest an einem Maschinenrahmen der Rundballenpresse angeordnet. Bei der Rundballenpresse handelt es sich vorzugsweise um eine selbstfahrende oder eine im Betrieb an einen Schlepper angehängte Rundballenpresse. Im Falle der Fahrzeugkombination ist das Koppelrahmenelement als vom Maschinenrahmen der Rundballenpresse umfasst zu betrachten. Insbesondere müssen in diesem Fall das Überleitelement und das Deichselelement nicht am selben Bauteil des Maschinenrahmens der Rundballenpresse abgestützt sein.

Bevorzugt ist das zumindest eine Koppelrahmenelement an einer vom Maschinenrahmen der Rundballenpresse umfassten Fahrwerksachse angeordnet. Die Fahrwerksachse ist ein starres Bauteil, an dem seitlich insbesondere Räder gelagert sind und das sich unterhalb der Presskammer horizontal erstreckt. Durch die Anordnung des zumindest einen Koppelrahmenelementes an der Fahrwerksachse lässt sich die Hochachse in der Praxis besonders weit vorne anordnen, um die vorbeschriebenen Vorteile davon zu erreichen. Die Querachse ist insbesondere hinter der Fahrwerksachse, das heißt in die Aufnahmerichtung zur Fahrwerksachse versetzt, angeordnet. Dadurch lässt sich eine zuverlässige Führung des Rundballens zum Maschinerahmen der Ballenaufnahmevorrichtung erreichen.

Weitere Einzelheiten und Vorteile der Erfindung sind den nachfolgend beschriebenen, schematisch dargestellten Figuren zu entnehmen, es zeigen:
- Fig. 1: eine erfindungsgemäße Fahrzeugkombination bei Geradeausfahrt in einer Seitenansicht,
- Fig. 2: die Fahrzeugkombination gemäß Fig. 1 in einer Draufsicht,
- Fig. 3: eine Koppeleinrichtung und ein Deichselelement einer erfindungsgemäßen Ballenaufnahmevorrichtung der Fahrzeugkombination gemäß Fig. 1 in einer perspektivischen Darstellung,
- Fig. 4: in (a) die in Fig. 3 dargestellten Teile und zusätzliche Elemente der Fahrzeugkombination in einer perspektivischen Darstellung, und in (b) eine weitere Ausführungsform der Koppeleinrichtung und des Deichselelements,
- Fig. 5: die in Fig. 4 dargestellten Teile in einem Längsschnitt,
- Fig. 6: die Fahrzeugkombination gemäß Fig. 1 bei Kurvenfahrt in einer Draufsicht,
- Fig. 7: die in Fig. 4 dargestellten Teile bei Kurvenfahrt in einer perspektivischen Darstellung,
- Fig. 8: eine Koppeleinrichtung, ein Deichselelement, ein Überleitelement und einen Teil eines Maschinenrahmens einer weiteren erfindungsgemäßen Ballenaufnahmevorrichtung in einer Draufsicht.

Die nachfolgend erläuterten Merkmale können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwertige Teile mit identischen Bezugsziffern versehen.

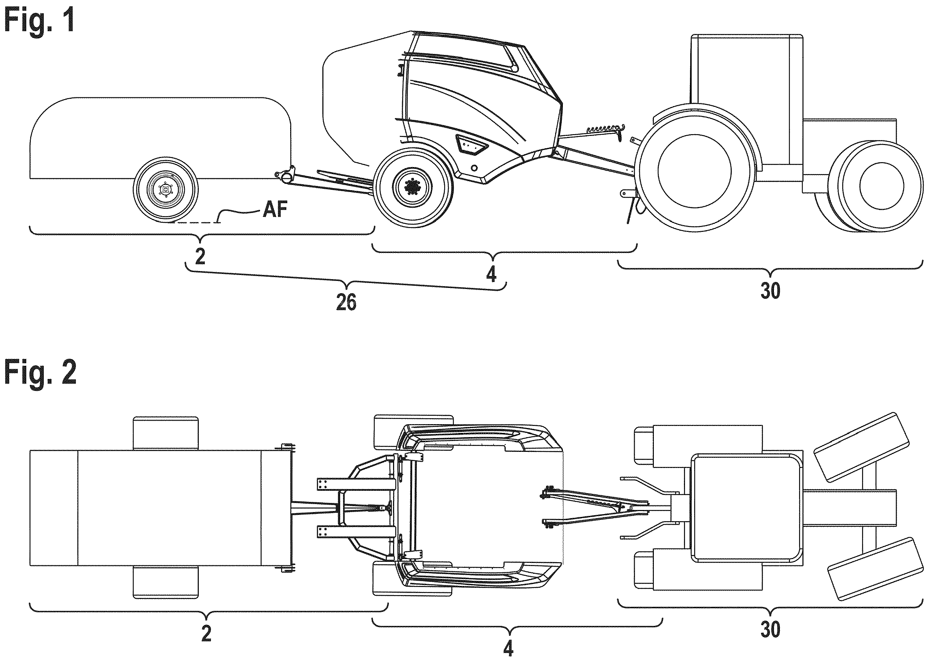

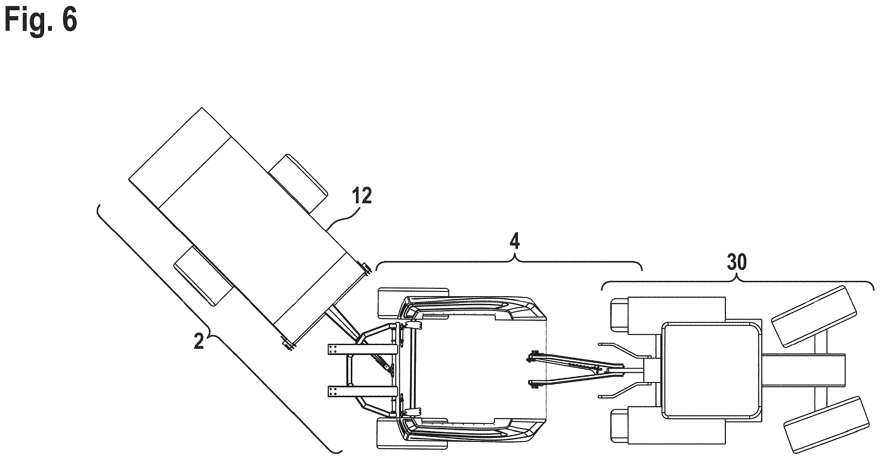

Die Fig. 1, 2 und 6 zeigen eine erfindungsgemäße Fahrzeugkombination 26 umfassend eine von einem Schlepper 30 gezogene Rundballenpresse 4 und eine mit der Rundballenpresse 4 gekoppelte Ballenaufnahmevorrichtung 2. Die Ballenaufnahmevorrichtung 2 dient zur Aufnahme mehrerer nicht dargestellter Rundballen von der Rundballenpresse 4, um die Rundballen gesammelt ablegen zu können und nicht im Nachhinein jeden Rundballen einzeln auflesen zu müssen.

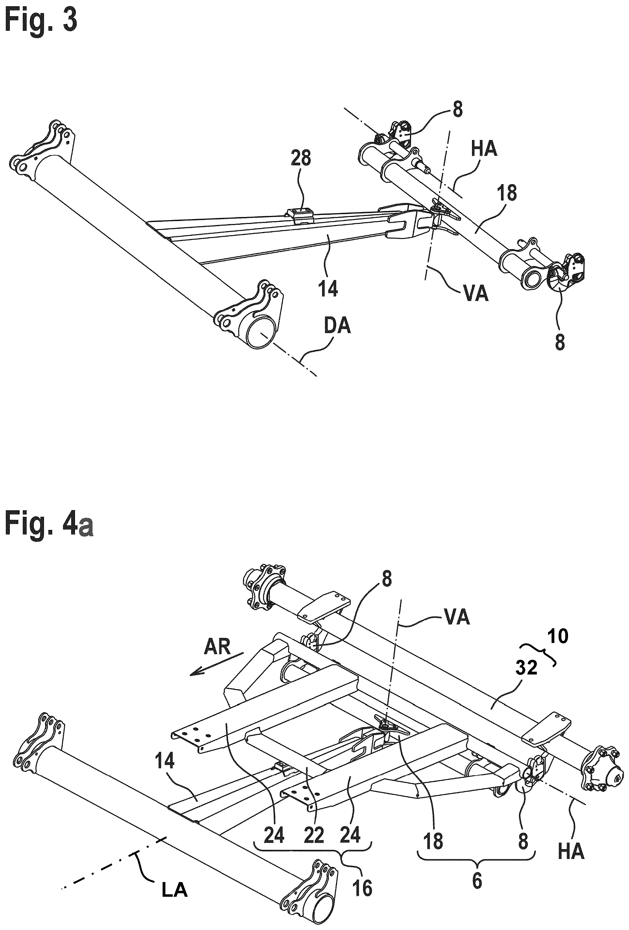

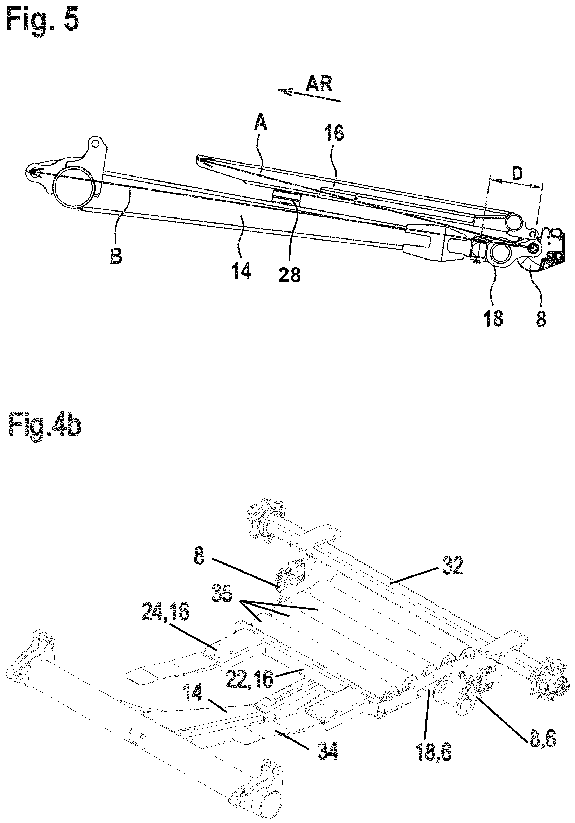

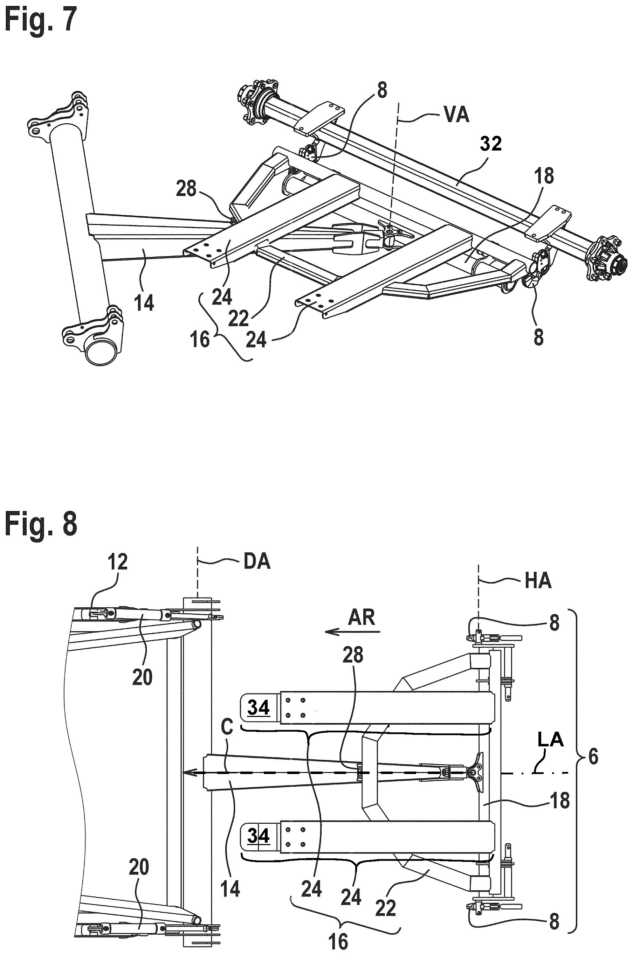

Die Ballenaufnahmevorrichtung 2 umfasst eine Koppeleinrichtung 6. Die Koppeleinrichtung 6 umfasst zwei Koppelrahmenelemente 8, die ortsfest an einer Fahrzeugachse 32 eines Maschinenrahmens 10 der Rundballenpresse 4 angeordnet sind (vgl. Fig. 3 und 4). Ferner umfasst die Koppeleinrichtung 6 ein Koppelzwischenelement 18. Das Koppelzwischenelement 18 ist schwenkbeweglich um eine Querachse HA an den Koppelrahmenelementen 8 gelagert. Am Koppelzwischenelement 18 ist ein Deichselelement 14 schwenkbeweglich um eine Hochachse VA gelagert. Eine Längsachse LA ist insbesondere zumindest in einer Stellung sowohl zur Hochachse VA als auch zur Querachse HA rechtwinklig angeordnet. Das Deichselelement 14 erstreckt sich in eine Aufnahmerichtung AR zwischen dem Koppelzwischenelement 18 und einem Maschinenrahmen 12 der Aufnahmevorrichtung 2. Die Hochachse VA erstreckt sich zumindest in einer ersten Stellung der Koppeleinrichtung 6 rechtwinklig zu einer Aufstandsfläche AF der Ballenaufnahmevorrichtung 2 (vgl. Fig. 1). An dem Koppelzwischenelement 18 ist ein Überleitelement 16 schwenkbar um die Querachse HA gelagert. Um die Hochachse VA oder eine dazu parallele Achse ist das Überleitelement 16 relativ zur Koppeleinrichtung 6 unbeweglich (vgl. Fig. 4 und 7). Das Überleitelement 16 erstreckt sich derart in die Aufnahmerichtung AR, dass das Deichselelement 14 in dem Längsschnitt bzw. der Seitenansicht gemäß Fig. 5 zumindest teilweise zwischen dem Überleitelement 16 und der Aufstandsfläche AF angeordnet ist.

Das Überleitelement 16 hat eine auf die Querachse HA bezogene radiale Erstreckung A, die zumindest zwei Drittel eines Abstandes B des Maschinenrahmens 12 der Ballenaufnahmevorrichtung 2 von der Querachse HA entspricht (vgl. Fig. 5). Die radiale Erstreckung ist bei der Ballenaufnahmevorrichtung 2 gemäß Fig. 8 durch verschraubte Verlängerungselemente 34 des Überleitelementes 16 variabel. Ferner ist ein Abstand C der Hochachse VA vom Maschinenrahmen 12 der Ballenaufnahmevorrichtung 2 (vgl. Fig. 8) mindestens fünffach so groß wie ein Abstand D der Hochachse VA von der Querachse (vgl. Fig. 5). Die Ballenaufnahmevorrichtung 2 weist zwei Deichselstellelemente 20 auf, die zu einer Verschwenkung des Deichselelementes 14 relativ zum Maschinenrahmen 12 der Ballenaufnahmevorrichtung 2 um eine Deichselschwenkachse DA ausgebildet sind, die in der mit den Fig. 1 und 2 dargestellten Geradeausstellung der Ballenaufnahmevorrichtung 2 parallel zur Querachse HA verläuft (vgl. Fig. 8).

Das Überleitelement 16 weist einen sich kreisförmig um die Hochachse VA erstreckenden Abstützabschnitt 22 auf, der in den Fig. 4a, 7 und 8 vereinfacht aus zueinander angewinkelten, geraden Elementen bestehend dargestellt ist. Der Abstützabschnitt 22 dient zur Abstützung des Überleitelementes 16 auf dem Deichselelement 14. Dazwischen ist an dem Deichselelement 14 ein Gleitlager 28 aus Kunststoff angeordnet, das die Verschwenkung des Deichselelementes 14 relativ zum Überleitelement 16 um die Hochachse VA erlaubt (vgl. Fig. 7). Neben dem Abstützabschnitt 22 weist das Überleitelement 16 zwei sich länglich in die Aufnahmerichtung AR erstreckende Überleitabschnitte 24 auf, zwischen denen in der Draufsicht gemäß Fig. 8 das Deichselelement 14 angeordnet ist.

Bei dem Überleielement 16 der Ausführungsform der Fig. 4b ist der Abstützabschnitt 22 demgegenüber etwa u- förmig ausgebildet und trägt zudem Rollen 35. Dadurch kann der aus der Rundballenpresse 4 ausgeworfene Rundballen mit weniger Reibung auf dem anfänglich sehr steilen Überleitelement 16 schnell und zuverlässig zur Ballenaufnahmevorrichtung 2 rollen.

## Patentansprüche

1. Ballenaufnahmevorrichtung (2) zur Aufnahme zumindest eines Rundballens von einer Rundballenpresse (4), umfassend eine Koppeleinrichtung (6) mit zumindest einem Koppelrahmenelement (8) zur ortsfesten Anordnung an einem Maschinenrahmen (10) der Rundballenpresse (4) und zumindest ein sich in eine Aufnahmerichtung (AR) zumindest teilweise zwischen dem Koppelrahmenelement (8) und einem Maschinenrahmen (12) der Ballenaufnahmevorrichtung (2) erstreckendes und derart an der Koppeleinrichtung (6) gelagertes Deichselelement (14), dass es relativ zum Koppelrahmenelement (8) zumindest um eine wenigstens in einer ersten Stellung der Koppeleinrichtung (6) zu einer Aufstandsfläche (AF) der Ballenaufnahmevorrichtung (2) rechtwinklige Hochachse (VA) schwenkbeweglich ist, **gekennzeichnet durch** ein an der Koppeleinrichtung (6) gelagertes, relativ zum Deichselelement (14) zumindest um die Hochachse (VA) schwenkbewegliches und sich derart in die Aufnahmerichtung (AR) erstreckendes Überleitelement (16), dass das Deichselelement (14) in einer Seitenansicht zumindest teilweise zwischen dem Überleitelement (16) und der Aufstandsfläche (AF) angeordnet ist.

2. Ballenaufnahmevorrichtung nach Anspruch 1, **dadurch gekennzeichnet, dass** das Überleitelement (16) derart an der Koppeleinrichtung (6) gelagert ist, dass es relativ zum Koppelrahmenelement (8) um eine zur Aufstandsfläche (AF) parallele Querachse (HA) schwenkbeweglich ist.

3. Ballenaufnahmevorrichtung nach Anspruch 2, **dadurch gekennzeichnet, dass** das Deichselelement (14) derart an der Koppeleinrichtung (6) gelagert ist, dass es relativ zum Koppelrahmenelement (8) um die Querachse (HA) schwenkbeweglich ist.

4. Ballenaufnahmevorrichtung nach einem der Ansprüche 2 oder 3, **dadurch gekennzeichnet, dass** das Überleitelement (16) derart an der Koppeleinrichtung (6) gelagert ist, dass es relativ zum Deichselelement (14) um die Querachse (HA) schwenkbeweglich ist.

5. Ballenaufnahmevorrichtung nach einem der Ansprüche 2 bis 4, **dadurch gekennzeichnet, dass** die Koppeleinrichtung (6) ein Koppelzwischenelement (18) aufweist, das am Koppelrahmenelement (8) ausschließlich schwenkbeweglich um die Querachse (HA) gelagert ist und am Deichselelement (14) ausschließlich schwenkbeweglich um die Hochachse (VA) gelagert ist.

6. Ballenaufnahmevorrichtung nach Anspruch 5, **dadurch gekennzeichnet, dass** das Überleitelement (16) vom Koppelrahmenelement (8) beabstandet am Koppelzwischenelement (18) gelagert ist.

7. Ballenaufnahmevorrichtung nach einem der Ansprüche 2 bis 6, **dadurch gekennzeichnet, dass** das Überleitelement (16) eine auf die Querachse (HA) bezogene radiale Erstreckung (A) hat, die zumindest in einer Geradeausstellung der Ballenaufnahmevorrichtung zumindest der Hälfte, bevorzugt zumindest zwei Drittel, besonders bevorzugt zumindest drei Viertel, eines Abstandes (B) des Maschinenrahmens (12) der Ballenaufnahmevorrichtung (2) von der Querachse (HA) entspricht.

8. Ballenaufnahmevorrichtung nach einem der Ansprüche 2 bis 7, **dadurch gekennzeichnet, dass** ein Abstand (C) der Hochachse (VA) vom Maschinenrahmen (12) der Ballenaufnahmevorrichtung (2) mindestens so groß ist, bevorzugt mindestens doppelt so groß ist, besonders bevorzugt mindestens fünffach so groß ist, wie ein Abstand (D) der Hochachse (VA) von der Querachse (HA).

9. Ballenaufnahmevorrichtung nach einem der Ansprüche 2 bis 8, **gekennzeichnet durch** zumindest ein Deichselstellelement (20), das zu einer Verschwenkung des Deichselelementes (14) relativ zum Maschinenrahmen (12) der Ballenaufnahmevorrichtung (2) um eine in einer/der Geradeausstellung der Ballenaufnahmevorrichtung zur Querachse (HA) parallele Deichselschwenkachse (DA) ausgebildet ist.

10. Ballenaufnahmevorrichtung nach einem der vorhergehenden Ansprüche, **dadurch gekennzeichnet, dass** das Überleitelement (16) einen Abstützabschnitt (22) zur Abstützung des Überleitelementes (16) auf dem Deichselelement (14) aufweist.

11. Ballenaufnahmevorrichtung nach Anspruch 10, **dadurch gekennzeichnet, dass** der Abstützabschnitt (22) sich kreisbogenförmig um die Hochachse (VA) erstreckt.

12. Ballenaufnahmevorrichtung nach Anspruch 10 oder 11, **dadurch gekennzeichnet, dass** zwischen dem Deichselelement (14) und dem Überleitelement (16) ein Kugellager oder ein Gleitlager (28), insbesondere aus Kunststoff, angeordnet ist.

13. Ballenaufnahmevorrichtung nach einem der vorhergehenden Ansprüche, **dadurch gekennzeichnet, dass** das Überleitelement (16) zumindest zwei sich länglich in die Aufnahmerichtung (AR) erstreckende Überleitabschnitte (24) aufweist, zwischen denen sich in einer Draufsicht zumindest in einer/der Geradeausstellung der Ballenaufnahmevorrichtung das Deichselelement (14) zumindest teilweise erstreckt.

14. Fahrzeugkombination (26) umfassend eine Rundballenpresse (4) und eine mit der Rundballenpresse (4) gekoppelte Ballenaufnahmevorrichtung (2) nach einem der vorhergehenden Ansprüche, wobei das zumindest eine Koppelrahmenelement (8) ortsfest an einem Maschinenrahmen (10) der Rundballenpresse (4) angeordnet ist.

15. Fahrzeugkombination nach Anspruch 14, **dadurch gekennzeichnet, dass** das zumindest eine Koppelrahmenelement (8) an einer vom Maschinenrahmen (10) der Rundballenpresse (4) umfassten Fahrwerksachse (32) angeordnet ist.

## Claims

1. Bale receiving device (2) for receiving at least one round bale from a round baler (4), the bale receiving device comprising a coupling device (6), which has at least one coupling frame element (8) for stationary arrangement on a machine frame (10) of the round baler (4), and at least one drawbar element (14), which extends in a receiving direction (AR) at least in part between the coupling frame element (8) and a machine frame (12) of the bale receiving device (2) and is mounted on the coupling device (6) such that it is pivotably movable relative to the coupling frame element (8) at least about a vertical axis (VA) that is perpendicular to a tire contact area (AF) of the bale receiving device (2) at least in a first position of the coupling device (6),**characterized by** a transition element (16), which is mounted on the coupling device (6), is pivotable relative to the drawbar element (14) at least about the vertical axis (VA), and extends in the receiving direction (AR) such that, in a side view, the drawbar element (14) is arranged at least in part between the transition element (16) and the tire contact area (AF).

2. Bale receiving device according to claim 1, **characterized in that** the transition element (16) is mounted on the coupling device (6) such that it is pivotable relative to the coupling frame element (8) about a transverse axis (HA) parallel to the tire contact area (AF).

3. Bale receiving device according to claim 2, **characterized in that** the drawbar element (14) is mounted on the coupling device (6) such that it is pivotable about the transverse axis (HA) relative to the coupling frame element (8).

4. Bale receiving device according to either claim 2 or 3,
**characterized in that** the transition element (16) is mounted on the coupling device (6) such that it is pivotable about the transverse axis (HA) relative to the drawbar element (14).

5. Bale receiving device according to any of claims 2 to 4,
**characterized in that** the coupling device (6) comprises a coupling intermediate element (18) which is mounted on the coupling frame element (8) so as to be pivotable only about the transverse axis (HA) and on the drawbar element (14) so as to be pivotable only about the vertical axis (VA).

6. Bale receiving device according to claim 5, **characterized in that** the transition element (16) is mounted on the coupling intermediate element (18) so as to be spaced apart from the coupling frame element (8).

7. Bale receiving device according to any of claims 2 to 6,
**characterized in that** the transition element (16) has a radial extent (A), relative to the transverse axis (HA), which radial extent, at least in a straight-ahead position of the bale receiving device, corresponds to at least half, preferably at least two-thirds, particularly preferably at least three-quarters, of a distance (B) between the machine frame (12) of the bale receiving device (2) and the transverse axis (HA).

8. Bale receiving device according to any of claims 2 to 7,
**characterized in that** a distance (C) between the vertical axis (VA) and the machine frame (12) of the bale receiving device (2) is at least as large, preferably at least twice as large, particularly preferably at least five times as large, as a distance (D) between the vertical axis (VA) and the transverse axis (HA).

9. Bale receiving device according to any of claims 2 to 8, **characterized by** at least one drawbar adjusting element (20), which is designed to pivot the drawbar element (14) relative to the machine frame (12) of the bale receiving device (2) about a drawbar pivot axis (DA) parallel to the transverse axis (HA) in a/the straight-ahead position of the bale receiving device.

10. Bale receiving device according to any of the preceding claims, **characterized in that** the transition element (16) has a support portion (22) for supporting the transition element (16) on the drawbar element (14).

11. Bale receiving device according to claim 10, **characterized in that** the support portion (22) extends in a circular arc around the vertical axis (VA).

12. Bale receiving device according to claim 10 or 11, **characterized in that** a ball bearing or a sliding bearing (28), in particular made of plastics material, is arranged between the drawbar element (14) and the transition element (16).

13. Bale receiving device according to any of the preceding claims, **characterized in that** the transition element (16) has at least two transition portions (24) extending elongately in the receiving direction (AR), between which, in a plan view, the drawbar element (14) extends at least in part at least in a/the straight-ahead position of the bale receiving device.

14. Vehicle combination (26) comprising a round baler (4) and a bale receiving device (2), coupled to the round baler (4), according to any of the preceding claims, wherein the at least one coupling frame element (8) is fixedly arranged on a machine frame (10) of the round baler (4).

15. Vehicle combination according to claim 14, **characterized in that** the at least one coupling frame element (8) is arranged on a chassis axle (32) encompassed by the machine frame (10) of the round baler (4).

## Revendications

1. Dispositif de réception de balles (2) destiné à recevoir au moins une balle ronde provenant d'une presse à balles rondes (4), comprenant un appareil d'accouplement (6) comportant au moins un élément de châssis d'accouplement (8) destiné à être disposé de manière fixe sur un châssis de machine (10) de la presse à balles rondes (4) et au moins un élément formant barre d'attelage (14) s'étendant, dans une direction de réception (AR), au moins partiellement entre l'élément de châssis d'accouplement (8) et un châssis de machine (12) du dispositif de réception de balles (2) et monté sur l'appareil d'accouplement (6) de telle sorte qu'il peut pivoter par rapport à l'élément de châssis d'accouplement (8) au moins autour d'un axe vertical (VA) perpendiculaire à une surface de contact (AF) du dispositif de réception de balles (2) au moins dans une première position de l'appareil d'accouplement (6), **caractérisé par** un élément de transfert (16) monté sur l'appareil d'accouplement (6), pouvant pivoter par rapport à l'élément formant barre d'attelage (14) au moins autour de l'axe vertical (VA) et s'étendant dans la direction de réception (AR) de telle sorte que, dans une vue latérale, l'élément formant barre d'attelage (14) est disposé au moins partiellement entre l'élément de transfert (16) et la surface de contact (AF).

2. Dispositif de réception de balles selon la revendication 1,
**caractérisé en ce que** l'élément de transfert (16) est monté sur l'appareil d'accouplement (6) de telle sorte qu'il peut pivoter par rapport à l'élément de châssis d'accouplement (8) autour d'un axe transversal (HA) parallèle à la surface de contact (AF).

3. Dispositif de réception de balles selon la revendication 2,
**caractérisé en ce que** l'élément formant barre d'attelage (14) est monté sur l'appareil d'accouplement (6) de telle sorte qu'il peut pivoter par rapport à l'élément de châssis d'accouplement (8) autour de l'axe transversal (HA).

4. Dispositif de réception de balles selon l'une des revendications 2 ou 3, **caractérisé en ce que** l'élément de transfert (16) est monté sur l'appareil d'accouplement (6) de telle sorte qu'il peut pivoter par rapport à l'élément formant barre d'attelage (14) autour de l'axe transversal (HA).

5. Dispositif de réception de balles selon l'une des revendications 2 à 4, **caractérisé en ce que** l'appareil d'accouplement (6) présente un élément intermédiaire d'accouplement (18) qui est monté sur l'élément de châssis d'accouplement (8) de manière à pouvoir pivoter exclusivement autour de l'axe transversal (HA) et qui est monté sur l'élément formant barre d'attelage (14) de manière à pouvoir pivoter exclusivement autour de l'axe vertical (VA).

6. Dispositif de réception de balles selon la revendication 5,
**caractérisé en ce que** l'élément de transfert (16) est monté sur l'élément intermédiaire d'accouplement (18) à distance de l'élément de châssis d'accouplement (8).

7. Dispositif de réception de balles selon l'une des revendications 2 à 6, **caractérisé en ce que** l'élément de transfert (16) possède une extension (A) radiale par rapport à l'axe transversal (HA) qui, au moins lorsque le dispositif de réception de balles est dans une position droite, correspond à au moins la moitié, de préférence à au moins deux tiers, de manière particulièrement préférée à au moins trois quarts, d'une distance (B) entre le châssis de machine (12) du dispositif de réception de balles (2) et l'axe transversal (HA).

8. Dispositif de réception de balles selon l'une des revendications 2 à 7, **caractérisé en ce qu'**une distance (C) entre l'axe vertical (VA) et le châssis de machine (12) du dispositif de réception de balles (2) est au moins aussi grande, de préférence au moins deux fois plus grande, de manière particulièrement préférée au moins cinq fois plus grande, qu'une distance (D) entre l'axe vertical (VA) et l'axe transversal (HA).

9. Dispositif de réception de balles selon l'une des revendications 2 à 8, **caractérisé par** au moins un élément de réglage de barre d'attelage (20) qui est réalisé pour faire pivoter l'élément formant barre d'attelage (14) par rapport au châssis de machine (12) du dispositif de réception de balles (2) autour d'un axe de pivotement de barre d'attelage (DA) parallèle à l'axe transversal (HA) dans une/la position droite du dispositif de réception de balles.

10. Dispositif de réception de balles selon l'une des revendications précédentes, **caractérisé en ce que** l'élément de transfert (16) présente une section de soutien (22) destinée à soutenir l'élément de transfert (16) sur l'élément formant barre d'attelage (14).

11. Dispositif de réception de balles selon la revendication 10,
**caractérisé en ce que** la section de soutien (22) s'étend en forme d'arc de cercle autour de l'axe vertical (VA).

12. Dispositif de réception de balles selon la revendication 10 ou 11, **caractérisé en ce qu'**un roulement à billes ou un palier lisse (28), en particulier en matière plastique, est disposé entre l'élément formant barre d'attelage (14) et l'élément de transfert (16).

13. Dispositif de réception de balles selon l'une des revendications précédentes, **caractérisé en ce que** l'élément de transfert (16) présente au moins deux sections de transfert (24) s'étendant longitudinalement dans la direction de réception (AR), entre lesquelles s'étend au moins partiellement, dans une vue en plan, l'élément formant barre d'attelage (14) au moins lorsque le dispositif de réception de balles est dans une/la position droite.

14. Ensemble de véhicules (26) comprenant une presse à balles rondes (4) et un dispositif de réception de balles (2) selon l'une des revendications précédentes accouplé à la presse à balles rondes (4), dans lequel l'au moins un élément de châssis d'accouplement (8) est disposé de manière fixe sur un châssis de machine (10) de la presse à balles rondes (4).

15. Ensemble de véhicules selon la revendication 14, **caractérisé en ce que** l'au moins un élément de châssis d'accouplement (8) est disposé sur un essieu de mécanisme de roulement (32) que comprend le châssis de machine (10) de la presse à balles rondes (4).
